# EUROPEAN PATENT APPLICATION

(11) **EP 0 934 864 A1**
(43) Date of publication of application: **11.08.1999**
(21) Application number: 99200331.9
(22) Date of filing: 05.02.1999
(51) Int. Cl.: B62D 7/14

(54) **A Vehicle comprising a steerable rear axle**

(30) Priority: 06.02.1998 NL 1008223
(71) Applicant: Veenhuis Voertuigtechnik B.V., 8102 HG Raalte (NL)
(72) Inventor: Veenhuis, Theodorus Johannes Maria, 8102 HG Raalte (NL)
(74) Representative: Louet Feisser, Arnold

(57) **Abstract**

A vehicle comprising a frame (11), at least two steering front wheels, a first rear axle (12) fitted with at least two wheels (14) and a second rear axle (13) fitted with at least two wheels (14), which is positioned behind said first rear axle (12). The first rear axle (12) is mounted in the frame (11) in a position substantially transversely to the longitudinal direction of the vehicle, and the second rear axle (13) is mounted in the frame (11) in such manner as to be capable of pivoting movement about a substantially vertical pivot axis (20). Said vertical pivot axis (20) is positioned before the central axis (5) of the second rear axle (13).

## Description

The invention relates to a vehicle comprising a frame, at least two steering front wheels, a first rear axle fitted with at least two wheels and a second rear axle fitted with at least two wheels, which is positioned behind said first rear axle, wherein said first rear axle is mounted in the frame in a position substantially transversely to the longitudinal direction of the vehicle, and wherein the second rear axle is mounted in the frame in such manner as to be capable of pivoting movement about a substantially vertical pivot axis. Such a vehicle is generally intended for transporting heavy loads, for which purpose more than one rear axle is required, possibly more than the aforesaid two rear axles.

In order to reduce tyre wear and improve the driving characteristics of the vehicle, it is known to mount a rear axle of the vehicle, in particular the rearmost rear axle, such that it is capable of pivoting movement, so that said rear axle can be steered by means of hydraulic cylinders, for example, in a direction which corresponds with the direction of movement of the vehicle. The supply and discharge of fluid to the hydraulic cylinders can thereby be controlled in dependence on the position of the steered front wheels of the vehicle, for example, or in dependence on another signal, which varies according to the direction in which the vehicle is being steered.

In practice, a relatively large force is needed for pivoting the second rear axle, whilst generally measures must be taken for keeping the rear axle in a stable position.

The objective of the invention is to provide a vehicle with a pivoted rear axle, which rear axle can be steered by relatively small forces, and which generally takes up a stable position during use of the vehicle.

In order to accomplish that objective, the vertical pivot axis about which the second rear axle can pivot is positioned before the central axis of the second rear axle. When the pivot axis is positioned before the central axis of the second rear axle, seen in the direction of movement of the vehicle, said rear axle will tend to take up a position which corresponds with the direction of movement of the vehicle when driving in forward direction, also when said rear axle is not controlled by means of hydraulic cylinders.
Nevertheless, steering of the rear axle will remain necessary, for example when reversing the vehicle, but also in order to have the rear axle take up the correct position.

Preferably, the distance between said pivot axis and said central axis is larger than 50 mm, more preferably larger than 100 mm, and in a preferred embodiment larger than 150 mm.

In one preferred embodiment, the wheels of the second rear axle are driven, whereby a drive shaft which is mounted centrally in the vehicle drives the differential gear in the second rear axle via a universal joint. By positioning the pivot axis of the second rear axle before the central axis of said rear axle, the load on said universal joint will be reduced, because said universal joint will swing aside less far from the centre of the vehicle upon pivoting movement of the second rear axle.

The term universal joint is understood to include any joint which rotatably interconnects two shafts, wherein the two shafts can include an angle with each other.

In one preferred embodiment, the second rear axle is pivotally mounted in the vehicle by means of an upper mounting element, which is capable of movement in substantially vertical direction with respect to the vehicle, and by means of a lower mounting element, which is capable of movement in a plane substantially transversely to the longitudinal direction of the vehicle with respect to said vehicle, wherein the two mounting elements are located on said pivot axis. In this manner it is possible to enable movement of the rear axle in a transverse plane with respect to the vehicle, which movement is necessary when the vehicle is being driven.

Preferably, the upper mounting element is fixed to an upper pivoting arm, which is pivotally mounted in the frame of the vehicle in two points, which points are positioned symmetrically relative to the vertical longitudinal median plane of the vehicle. The lower mounting element is preferably fixed to a lower pivoting arm, which is pivotally mounted in the frame of the vehicle in a point which lies in said longitudinal median plane of the vehicle. The weight of the vehicle and the load is furthermore transmitted to the second rear axle via two hydraulic supporting cylinders, which are fixed on the one hand on the frame and on the other hand to the second rear axle, namely near the wheels.

In one preferred embodiment, said substantially vertical pivot axis is positioned in the vertical longitudinal median plane of the vehicle, in a direction obliquely upwards to the rear. Said direction deviates 3° from the vertical direction, for example. In practice it has become apparent, that the handling of the vehicle is improved by having the pivot axis extend obliquely in this manner.

The invention furthermore relates to a method for steering a vehicle, wherein the rearmost axle of the vehicle is pivoted, by means of one or two hydraulic cylinders, about a substantially vertical pivot axis, which is positioned before the central axis of said rear axle.

The invention furthermore relates to a method for manufacturing a vehicle comprising a frame, at least two steering front wheels, a first rear axle fitted with at least two wheels and a second rear axle fitted with at least two wheels, which is positioned behind said first rear axle, wherein said first rear axle is mounted in the frame in a position substantially transversely to the longitudinal direction of the vehicle, and wherein the second rear axle is mounted in the frame in such manner as to be capable of pivoting movement about a substantially vertical pivot axis, wherein the second rear axle is removed from a vehicle which is provided with a second rear axle which is mounted in the frame of the vehicle in a position substantially transversely to the longitudinal direction of said vehicle, after which a second rear axle which is capable of pivoting movement about a substantially vertical pivot axis is mounted, said pivot axis being positioned before the central axis of said second rear axle.

Further aspects of the invention, which may be used both separately and in combination with each other, are described hereafter with reference to the figures and defined in the claims.

The invention will be explained in more detail hereafter with reference to the drawing, which shows an embodiment of a vehicle.
Figure 1 is a plan view of the rear part of a truck; and
Figure 2 is a partially sectional side view.

The figures are merely schematic representations, wherein certain parts of the vehicle are not shown.

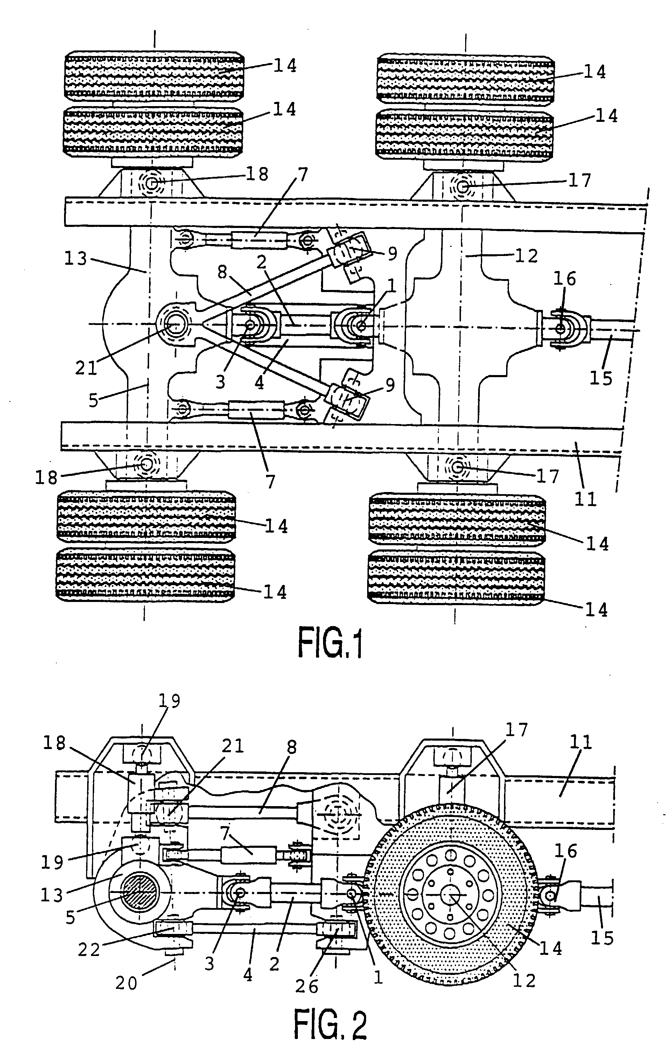

Figure 1 shows the rear part of a frame 11 of a vehicle comprising a first rear axle 12 and a second rear axle 13. Each of said rear axles 12, 13 is fitted with four wheels 14. The wheels 14 of the two rear axles 12, 13 are driven via a differential which is present in each rear axle. Said driving takes place via a main drive shaft 15, which drives the differential in the first rear axle 12 via a universal joint 16, and which also drives, via universal joint 1, a secondary drive shaft 2, which drives the differential in the second rear axle 13 via universal joint 3. All rear wheels of the vehicle are driven in this manner. One or more further rear axles (not shown) may be present before first rear axle 12.

First rear axle 12 is mounted in frame 11 in such a manner (not shown in the figures) that said rear axle is only capable of movement in a vertical transverse plane, wherein the weight of the vehicle and the load is transmitted to the first rear axle 12 by means of hydraulic supporting cylinders 17, which are mounted between first rear axle 12 and frame 11.

In a corresponding manner, hydraulic supporting cylinders 18 are present between frame 11 and second rear axle 13, which cylinders transmit the weight of the vehicle and the load to second rear axle 13. Hydraulic supporting cylinder 18 is connected both to frame 11 and to rear axle 13 by means of a ball joint 19 (Figure 2), which connection allows second rear axle 13 to move in a horizontal plane, in particular to make a pivoting movement about said substantially vertical pivot axis 20 (Figure 2).

In order to be able to make said pivoting movement, second rear axle 13 is connected to frame 11 by means of an upper mounting element 21 and a lower mounting element 22, wherein the two mounting elements 21, 22 are located on pivot axis 20, enabling pivoting movement about said pivot axis.

The upper mounting element 21 is fixed to an upper pivoting arm 8, which comprises two legs which are interconnected in the form of a V, which are each connected to frame 11 by means of a mounting element 9. All mounting elements 8, 9, 21, 22, 26 comprise a ball joint, so that the upper mounting element 21 is capable of making a movement in substantially vertical direction by pivoting about mounting elements 24.

Lower mounting element 22 is fixed to lower pivoting arm 4, which pivoting arm is pivotally connected to frame 11 by means of mounting element 26. This enables lower mounting element 22 to make a movement substantially in a vertical transverse plane of the vehicle.

Pivot axis 20, about which second rear axle 13 can pivot, is positioned before the central axis of second rear axle 13, seen in the direction of movement of the vehicle. As is apparent from Figure 2, the position of pivot axis 20 is such that it slightly slopes upward to the rear, which appears to be advantageous in practice.

The pivoting of second rear axle 13 about pivot axis 20 is effected by means of the two hydraulic steering cylinders 7. The supply and discharge of fluid to and from said steering cylinders can be controlled in dependence on the position of the front wheels of the vehicle, for example. This manner of controlling the steering of the rear axle is known per se.

Since pivot axis 20 is positioned before central axis 5 of second rear axle 13, the second rear axle 13 will tend to follow the direction of movement of the vehicle when driving in forward direction, also in bends. As a result of this, less force is required from the hydraulic cylinders 7 for keeping second rear axle 13 in the desired position.

The illustrated embodiment is merely an example of the implementation of the invention.

## Claims

1. A vehicle comprising a frame (11), at least two steering front wheels, a first rear axle (12) fitted with at least two wheels (14) and a second rear axle (13) fitted with at least two wheels (14), which is positioned behind said first rear axle (12), wherein said first rear axle (12) is mounted in the frame (11) in a position substantially transversely to the longitudinal direction of the vehicle, and wherein the second rear axle (13) is mounted in the frame (11) in such manner as to be capable of pivoting movement about a substantially vertical pivot axis (20),
characterized in that said vertical pivot axis (20) is positioned before the central axis (5) of the second rear axle (13).

2. A vehicle according to claim 1, characterized in that the distance between said pivot axis (20) and said central axis (5) is larger than 50 mm, preferably larger than 100 mm, and more preferably larger than 150 mm.

3. A vehicle according to any one of the preceding claims, characterized in that the wheels (14) of the second rear axle (13) are driven by means of a drive shaft (2) which is mounted substantially in the longitudinal direction of the vehicle, and which is provided with a universal joint (3) near said second rear axle (13), which drive shaft (2) drives, via said universal joint (3), a differential which is centrally provided in said rear axle (13).

4. A vehicle according to claim 3, characterized in that said universal joint (3) is positioned before said pivot axis (20), seen in plan view, preferably more than 50 mm, more preferably more than 100 mm and even more preferably more than 150.

5. A vehicle according to any one of the preceding claims, characterized in that the second rear axle (13) is pivotally mounted in the vehicle by means of an upper mounting element (21), which is capable of movement in substantially vertical direction with respect to the vehicle, and by means of a lower mounting element (22), which is capable of movement in a plane substantially transversely to the longitudinal direction of the vehicle with respect to said vehicle, wherein the two mounting elements (21, 22) are located on said pivot axis (20).

6. A vehicle according to claim 5, characterized in that the upper mounting element (21) is fixed to an upper pivoting arm (8), which is pivotally mounted in the frame (11) of the vehicle, and in that the lower mounting element (22) is fixed to a lower pivoting arm (4), which is pivotally mounted in the frame (11) of the vehicle, wherein said upper pivoting arm (8) and said lower pivoting arm (4) extend substantially parallel to each other, seen in side view.

7. A vehicle according to any one of the preceding claims, characterized in that said pivot axis (20) slopes upwards to the rear in the vertical longitudinal median plane of the vehicle, preferably at an angle of more than 3 degrees, more preferably at an angle of more than 6 degrees.

8. A method for steering a vehicle, wherein the rearmost rear axle (13) of the vehicle is pivoted, by means of one or two hydraulic cylinders (7), about a substantially vertical pivot axis (20), which is positioned before the central axis (5) of said rear axle (13).

9. A method for manufacturing a vehicle comprising a frame (11), at least two steering front wheels, a first rear axle (12) fitted with at least two wheels (14) and a second rear axle (13) fitted with at least two wheels (14), which is positioned behind said first rear axle (12), wherein said first rear axle (12) is mounted in the frame (11) in a position substantially transversely to the longitudinal direction of the vehicle, and wherein the second rear axle (13) is mounted in the frame (11) in such manner as to be capable of pivoting movement about a substantially vertical pivot axis (20), wherein the second rear axle (13) is removed from a vehicle which is provided with a second rear axle (13) which is mounted in the frame (11) of the vehicle in a position substantially transversely to the longitudinal direction of said vehicle, after which a second rear axle (13) which is capable of pivoting movement about a substantially vertical pivot axis (20) is mounted, said pivot axis (20) being positioned before the central axis (5) of said second rear axle (13).
